# EUROPÄISCHE PATENTSCHRIFT

(11) **EP 1 777 252 B1**
(45) Veröffentlichungstag und Bekanntmachung des Hinweises auf die Patenterteilung: **09.12.2009**
(21) Anmeldenummer: 06021105.9
(22) Anmeldetag: 07.10.2006
(51) Int. Cl.: C08J 9/00, C08G 77/04

(54) **Verfahren zur Herstellung von Polyurethan-Kaltschäumen**
Process for the manufacture of cold-cure polyurethane foams
Procédé de fabrication de mousses de polyuréthane durcies à froid

(30) Priorität: 21.10.2005 DE 102005050473
(43) Veröffentlichungstag der Anmeldung: 25.04.2007
(73) Patentinhaber: Evonik Goldschmidt GmbH, 45127 Essen (DE)
(72) Erfinder: Glos, Martin, Dr., 45145 Essen (DE); Modro, Harald, 45968 Gladbeck (DE); Vidakovic, Mladen, 47269 Duisburg (DE)

(56) Entgegenhaltungen:
- EP-A1- 1 095 968
- DE-A1- 2 356 443
- DE-A1- 2 728 031
- DE-C1- 3 215 317
- US-A- 4 347 330

## Beschreibung

Die vorliegende Erfindung betrifft ein Verfahren zur Herstellung von Polyurethan-Kaltschäumen wobei man als Stabilisatoren Polydimethylsiloxane verwendet.

Die großtechnische Herstellung von Polyurethan-Weichschäumen unter Verwendung von Isocyanaten, Polyetherpolyolen, gegebenenfalls Vernetzern sowie sonstigen geeigneten Additiven ist seit langem bekannt und ist z.B. beschrieben in Becker/Braun, Kunststoff-Handbuch, Band 7, Polyurethane, Carl Hanser Verlag, München, Wien, 2. Auflage 1983.

Je nach Reaktivität der Rohstoffe unterscheidet man dabei zwischen Heißweichschäumen (im Folgenden Heißschäume) und Kaltweichschäumen (im Folgenden Kaltschäume), wobei sich die Begriffe von der Formverschäumung ableiten. So ist es bei der Herstellung von Heißschäumen nach dem Formverfahren aufgrund der geringen Reaktivität der Rohstoffe notwendig, den Schaum in der Form bei erhöhter Temperatur zur vollständigen Vernetzung auszuheizen; diese Schäume werden deshalb als Heißschäume bezeichnet.

Die Entwicklung hochreaktiver Polyetherpolyole und gegebenenfalls die zusätzliche Verwendung von Vernetzern ermöglichen es hingegen, die Herstellung des Schaumes in der Form aufgrund der raschen Aushärtung bei geringerer Wärmezufuhr durchzuführen. Derartige Schäume werden deshalb Kaltschäume genannt.

Neben der Formverschäumung ist es dabei auch möglich, die Verschäumung nach dem Blockverfahren durchzuführen, wofür sich die Begriffe Kalt- bzw. Heißschaum ebenfalls eingebürgert haben.

Aufgrund der verschiedenen Rohstoffbasen weisen Kaltschäume ganz typische physikalische Eigenschaften auf, die sie von Heißschäumen unterscheiden.

Die Kaltschäume besitzen:
(a) einen latexartigen Griff,
(b) eine gegenüber den konventionellen Heißschäumen erhöhte Elastizität, weshalb diese Schäume auch als "High Resilience Schäume" (HR-Schäume) bezeichnet werden,
(c) eine vom Heißschaum unterschiedliche Stauchhärte-Charakteristik (höherer SAG-Faktor) und weisen damit bei Verwendung als Polstermaterial einen besseren Sitzkomfort auf (Möbelschaum),
(d) gute Dauergebrauchseigenschaften mit nur geringer Ermüdungstendenz, was insbesondere im Automobilbereich von grossem Interesse ist,
(e) aufgrund ihres Schmelzverhaltens eine bessere Flammwidrigkeit als konventionelle Heißschäume,
(f) günstigere Energiebilanz und kürzere Standzeiten bei der Formverschäumung.

Im Detail wird zur Herstellung eines PU-Weichschaumes ein Gemisch aus Polyol, polyfunktionellem Isocyanat, Aminaktivator, Zinn- oder Zink-Katalysator, Stabilisator, Treibmittel (entweder Wasser zur Bildung von CO₂ und, falls nötig, Zusatz von physikalischen Treibmitteln), gegebenenfalls unter Zugabe von Flammschutzmitteln, Farbpasten, Füllstoffen, Vernetzern oder sonstigen üblichen Verarbeitungshilfsmitteln, umgesetzt.

Der entscheidende Unterschied zum Heißschaum besteht bei der Kaltschaumherstellung darin, dass zum einen hochreaktive Polyole und optional noch niedermolekulare Vernetzer eingesetzt werden, wobei die Funktion des Vernetzers auch durch höherfunktionelle Isocyanate übernommen werden kann. Somit kommt es bereits in der Expansionsphase (CO₂-Bildung aus -NCO und H₂O) des Schaumes zu der Reaktion der Isocyanatgruppen mit den Hydroxylgruppen. Diese schnelle Polyurethanreaktion führt über den Viskositätsanstieg zu einer relativ hohen Eigenstabilität des Schaumes während des Treibvorgangs.

Für den Kaltschaum werden demzufolge Stabilisatoren benötigt, die zur Kontrolle der Zellgröße und Zellgrößenverteilung sowie zur Randzonenstabilisierung beitragen, aber keine oder nur schwach stabilisierende Eigenschaften aufweisen.

Grundsätzlich handelt es sich bei den typischen Kaltschaumstabilisatoren um Polymere auf Basis von Polysiloxanen, welche mehr oder weniger stark durch geeignete organische Gruppen modifiziert sind. In eigenstabilen Systemen werden insbesondere unmodifizierte Siloxane, die Polydimethylsiloxane, der Formel (1) 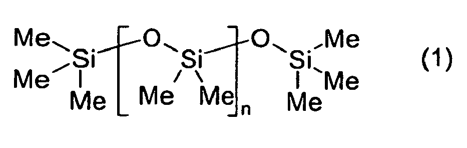 angewendet, wobei die Gesamtanzahl der Si-Atome N = n + 2 ist.

Als Polyole werden hochreaktive Polyole eingesetzt. Dabei handelt es sich zum einen um trifunktionelle Polyole, die neben einem hohen Molekulargewicht von üblicherweise zwischen etwa 4.800 und 6.500 g/mol mindestens 70 % (bis zu 95 %) primäre Hydroxylgruppen aufweisen, so dass deren OH-Zahl zwischen 36 und 26 mgKOH/g liegt. Diese Polyole sind bis zu 90 % aus Propylenoxid aufgebaut, enthalten aber fast ausschliesslich aus der Anlagerung von Ethylenoxid resultierende primäre OH-Endgruppen. Die primären OH-Gruppen sind weitaus reaktiver gegenüber den Isocyanatgruppen als die sekundären OH-Gruppen, der für den Heißweichschaum eingesetzten Polyole. Deren OH-Zahlen liegen (bei Molekulargewichten zwischen 3.000 und 4.500 g/mol) üblicherweise zwischen 56 und 42 mgKOH/g.

Die hochreaktiven Polyole erhält man durch Polyaddition von Propylenoxid bzw. Ethylenoxid an höherfunktionelle Verbindungen, wie Glycerin, Pentaerythrit oder Trimethylolpropan.

Eine weitere Klasse von hochreaktiven Polyolen stellen die sogenannten Füllkörperpolyole (Polymerpolyole) dar. Neben den oben aufgeführten Kenndaten zeichnen sie sich dadurch aus, dass sie feste organische Füllstoffe bis zu einem Feststoffgehalt von 40 % oder mehr in disperser Verteilung enthalten. Man verwendet unter anderem:
A. SAN-Polyole:
   Dies sind hochreaktive Polyole, welche ein Copolymer auf der Basis Styrol/Acrylnitril (SAN) dispergiert enthalten.
B. PHD-Polyole:
   Dies sind hochreaktive Polyole, welche Polyharnstoff ebenfalls in dispergierter Form enthalten.
C. PIPA-Polyole:
   Dies sind hochreaktive Polyole, welche ein Polyurethan (durch in situ-Reaktion eines Isocyanats mit einem Alkanolamin in einem konventionellen Polyol gebildet) in dispergierter Form enthalten.

Der Festkörperanteil, der je nach Anwendung bevorzugt zwischen 5 und 40 % liegt, ist für eine verbesserte Zellöffnung verantwortlich, so dass das Polyol insbesondere mit dem TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaumes.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole werden diese alleine oder in Abmischung mit den oben genannten ungefüllten Polyolen eingesetzt.

Als Isocyanate werden sowohl TDI (2,4- und 2,6-Toluylendiisocyanat-Isomerengemisch) als auch MDI (4,4'-Diphenylmethandiisocyanat) verwendet. Das sogenannte "crude MDI" oder "polymere MDI" enthält neben dem 4,4'- auch die 2,4'- und 2,2'-Isomeren sowie höherkernige Produkte. Als "pure MDI" bezeichnet man zweikernige Produkte aus überwiegend 2,4'- und 4,4'-Isomerengemischen bzw. deren Prepolymere.

Für Blockschäume und Formschäume werden häufig unterschiedliche Isocyanate eingesetzt. So wird als polyfunktionelles Isocyanat in Kaltblockschaumsystemen in der Regel reines TDI (verschiedene 2,4- und 2,6-Isomerengemische) in Kombination mit feststoffhaltigen Polyolen eingesetzt. Es kommen darüber hinaus auch modifizierte TDI-Typen in Kombination mit hochreaktiven ungefüllten Polyolen zum Einsatz. In den Schriften DE-A-25 07 161 und DE-A-26 03 498 ist auch die Verwendung von kristallinen Polyhydroxyverbindungen als Vernetzer bei der Blockverschäumung, in Kombination mit hochreaktiven ungefüllten Polyolen sowie TDI, trimerisiertem TDI oder auch TDI/MDI-Mischungen beschrieben. Reine MDI-Formulierungen werden hingegen bei der Herstellung von Kaltblockschäumen selten eingesetzt.

Als Aminaktivatoren werden bevorzugt tertiäre Amine, wie z.B. das überwiegend vernetzende, d.h. die Reaktion zwischen Isocyanat und Polyol katalysierende Triethylendiamin (TEDA) oder der überwiegend treibende, d.h. die Reaktion zwischen Isocyanat und Wasser katalysierende Bis(2-dimethylaminoethyl)ether (BDE) eingesetzt. Viele Rezepturen beruhen auf einer Kombinationskatalyse dieser beiden Verbindungen. Es sind aber auch andere gängige Amine möglich; die Einsatzmenge liegt üblicherweise zwischen 0,05 und 0,5 Teilen, bezogen auf 100,0 Teile Polyol.

Als Vernetzer werden niedermolekulare, gegenüber Isocyanaten reaktive mehrfunktionelle Verbindungen bezeichnet. Geeignet sind Hydroxyl- oder Amin-terminierte Substanzen, wie z.B. Glycerin, Triethanolamin (TEOA), Diethanolamin (DEOA) und Trimethylolpropan. Die Einsatzkonzentration liegt üblicherweise zwischen 0,5 und 2,0 Teilen, bezogen auf 100,0 Teile Polyol je nach Formulierung, kann aber auch davon abweichen. Bei Verwendung von crude MDI bei der Formverschäumung übernimmt dies ebenfalls eine vernetzende Funktion. Der Gehalt an niedermolekularen Vernetzern kann daher bei steigender Menge an crude MDI entsprechend reduziert werden.

Die Polyurethanreaktion wird im Allgemeinen durch die Zugabe von Zinnaktivatoren katalysiert. Verwendet wird entweder Dibutylzinndilaurat (DBTDL), Zinn(II)octoat, Zinnricinoleat oder auch geeignete Zink-Verbindungen. Die Einsatzmengen liegen üblicherweise zwischen 0,01 und 0,5 Teilen, bezogen auf 100,0 Teile Polyol, können aber auch davon abweichen.

Bei den Treibmitteln unterscheidet man chemische und physikalische Treibmittel. Zu den chemischen Treibmitteln gehört Wasser, dessen Reaktion mit den Isocyanatgruppen zur Bildung von CO₂ führt. Die Rohdichte des Schaumstoffes wird durch die zugegebene Wassermenge gesteuert, wobei die bevorzugten Einsatzmengen zwischen 1,5 und 5,0 Teilen, bezogen auf 100,0 Teile Polyol, liegen. Darüber hinaus können auch zusätzlich physikalische Treibmittel (z.B. Fluorchlorkohlenwasserstoffe, Methylenchlorid, Aceton, 1,1,1-Trichlorethan, etc.) eingesetzt werden.

Für die Herstellung von Kaltschaum werden außerdem Stabilisatoren benötigt, die zur Kontrolle der Zellgröße und Zellgrößenverteilung sowie Randzonenregulierung beitragen, aber im Vergleich zu Heißschaumstabilisatoren in der Regel nur schwach stabilisierende Eigenschaften aufweisen. Dabei unterscheiden sich die Anforderungen an die Stabilisatoren je nach Block- oder Formverschäumung:

Bei der Blockverschäumung ist neben der Schaumstabilisierung die notwendige Zellöffnung zum richtigen Zeitpunkt das eigentliche Problem. Ist die Polymerisationsreaktion bei Expansionsende so weit fortgeschritten, dass der Block bereits vollends chemisch stabilisiert wird, kann in der Regel das Öffnen nicht mehr durchgeführt werden. Der gesamte Block wird deshalb schrumpfen. Erfolgt die Zellöffnung zu frühzeitig, so führt das entweder zu einem Kollabieren des Schaumes oder bei relativ eigenstabilen Systemen zu einem Schaum, der einige Stunden nach seiner Herstellung einen Schrumpfprozess erleiden kann. Mit Hilfe eines geeigneten Stabilisators lässt sich sowohl der Zeitpunkt als auch die Intensität der Zellöffnung kontrollieren. Ausserdem soll der Stabilisator die Zellstruktur und insbesondere die Randzone (besonders wichtig im Formschaum) regulieren. Der Kaltschaum soll eine leicht vergröberte Zelle und eine unregelmäßige Zellstruktur aufweisen, so dass dessen besondere physikalische Eigenschaften erreicht werden.

Die Anforderungen an den Stabilisator für den Kaltblockschaum sind damit in erster Linie kontrollierte Schaumstabilisierung, Zellöffnung zum richtigen Zeitpunkt, Zellregulierung und Kontrolle der Zellgrößenverteilung.

Bei der Herstellung eines Formschaumkörpers treten zusätzliche Anforderungen auf. Das expandierende Reaktionsgemisch muss, um das ganze Formvolumen auszufüllen, relativ weite Fließwege überwinden. Der Reibungswiderstand an den Formwänden führt leicht zu einer Zerstörung ganzer Zellverbände, so dass unter der Schaumhaut Hohlräume entstehen. Dieses Fehlerbild tritt auch auf, wenn zur Verstärkung eingebrachte Einlegeteile umschäumt werden müssen. Eine weitere kritische Zone befindet sich im Bereich der Entlüftungsöffnungen. Strömt überschüssiges Treibgas mit zu hoher Geschwindigkeit an den Zellverbänden vorbei, führt dies zu partiell kollabierten Zonen.

Darüber hinaus wird die Beschaffenheit der Schaumhaut kritisch beurteilt.

Allgemeine Anforderungen an einen Stabilisator sind darüber hinaus eine hohe Effektivität, d.h. er sollte schon mit geringen Einsatzkonzentrationen seine optimale Wirksamkeit entfalten. Weiterhin sollte sein Verarbeitungsspiel groß sein, d.h. dass der Konzentrationsbereich, in dem der Stabilisator eingesetzt werden kann, möglichst groß sein soll, so dass geringe Veränderungen in der Schaumrezeptur problemlos durchgeführt werden können.

Zusammenfassend werden also an einen Kaltformschaumstabilisator folgende Anforderungen gestellt:

Ausreichende Stabilisierung des Schaums, Stabilisierung gegenüber den Einflüssen von Scherkräften, Stabilisierung der Randzone und der Haut, Kontrolle der Zellgröße und der Zellgrößenverteilung sowie die Vermeidung einer erhöhten Geschlossenzelligkeit.

Es wurden nun bereits spezielle Organosiloxane als Zusatzmittel für derartige Kaltschäume verwendet, um diese Störungen zu beheben, vgl. DE-OS-22 21 811, DE-OS-23 37 140 und DE-OS-22 46 400. Diese bekannten Organosiloxane weisen aber noch Nachteile auf, wie schlechte Reproduzierbarkeit, relativ hohe Einsatzkonzentrationen, ein für manche Fälle unzureichend ausgewogenes Verhältnis von regulierender Wirkung in den Randzonen des Schaumes und eine Schrumpftendenz der mit ihnen hergestellten Schäume.

Die Verwendung von niedrigviskosen Methylpolysiloxanen als Zusatzmittel für Kaltschäume war bereits bekannt. In der DE-OS-23 56 443 werden jedoch ihre Nachteile in einer unzumutbaren Schrumpftendenz beschrieben. Die in dieser Offenlegungsschrift ebenfalls konstatierte Wirkung derartiger niedrigviskoser Methylpolysiloxane zu einer Verfeinerung des Schaumstoffgefüges zu führen, ist ebenfalls ein Nachteil, da, wie man aus vielen Praxisversuchen bereits weiß, eine für Kaltschäume charakteristische leicht unregelmäßige Porenstruktur eine gute Voraussetzung für optimale Eigenschaften des Schaumstoffes für Polsterzwecke bildet.

In der DE-OS-25 33 074 wird ein Verfahren zur Herstellung von Kaltschäumen unter Verwendung von u.a. Polydimethylsiloxanen der allgemeinen Formel (1) beschrieben, 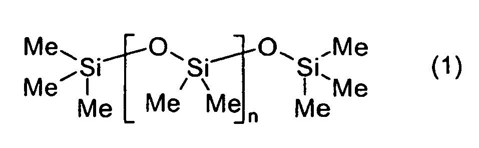 welches dadurch gekennzeichnet ist, dass man als Polysiloxane solche verwendet, in denen N = (n + 2) = 4 bis 12 ist, wobei der Gesamtgehalt an Polydimethylsiloxane mit N von 13 bis 22 max. 0,5 % betragen darf und Spezies mit N > 22 komplett abgetrennt sein müssen.

In der EP-A-1 095 968 wird dem Lösungsvorschlag auf der Basis der DE-OS-25 33 074 ein gutes Schaumstabilisierungsvermögen attestiert aber die mangelnde Formstabilität kritisiert. Zur Behebung dieses Nachteils wird vorgeschlagen, die Anteile an Polydimethylsiloxanen mit N von 7 bis 9 auf mindestens 90 % des Siloxan-Gemisches zu erhöhen.

Beiden Lösungsvorschlägen ist gemeinsam, dass nur Polydimethylsiloxane mit innerhalb des begrenzten Bereichs festgelegten Kettenlängen verwendet werden dürfen. Verbindungen, mit niedrigeren und höheren n-Werten können im Stabilisatorgemisch in Mengen von < 10 Gew.-%, vorzugsweise < 5 Gew.-%, vorhanden sein. Höhere n-Werte resultieren jedoch in einem signifikant höheren Anteil an geschlossenzelligen Schäumen mit der Wirkung eines höheren Schrumpfes. Niedrige n-Werte erniedrigen die Effizienz der Zellöffnung und sind aufgrund ihrer Flüchtigkeit in erheblichem Maße mitverantwortlich für den unerwünschten Fogging-Effekt.

Die entsprechenden Siloxane wie in DE-OS-25 33 074 und EP-A-1 095 968 mit der gewünschten engen Homologenverteilung müssen daher über aufwändige Trennverfahren, insbesondere fraktionierte Destillationen, hergestellt werden. Derartig energieintensive Prozesse, insbesondere zur Entfernung der höhersiedenden Bestandteile, sind in der heutigen Zeit der ständig steigenden Energiekosten verfahrensökonomisch nachteilig und daher nicht mehr sinnvoll.

Es bestand daher ein Bedarf an Stabilisatoren für Polyurethan-Kaltschäume, die das von der Praxis gestellte Anforderungsprofil erfüllen und mit weniger Energieaufwand erhalten werden können.

Überraschenderweise wurde nun gefunden, dass bei einer Erhöhung des Gehaltes an Polydimethylsiloxanen mit höheren n-Werten, d.h. deutlich über die im Stand der Technik angegebenen kritischen Grenzen, wieder brauchbare Stabilisatoren erhalten werden.
Diese "Eignungslücke" war aufgrund der eindeutigen Vorbehalte der Lehren des Standes der Technik in keiner Weise vorhersehbar.

Gegenstand der Erfindung ist somit ein Verfahren zur Herstellung von Polyurethankaltschäumen durch Umsetzung eines Gemisches aus hochreaktiven Polyolen, welche mindestens 70 % primäre Hydroxylgruppen und üblicherweise ein mittleres Molekulargewicht zwischen etwa 4.800 und 6.500 g/mol aufweisen und gegebenenfalls Füllstoffe enthalten, polyfunktionelle Isocyanate, Aminaktivatoren, Vernetzer, Katalysatoren, Treibmittel und Stabilisatoren, welches dadurch gekennzeichnet ist, dass man als Stabilisatoren Verbindungen der allgemeinen Formel (1) verwendet 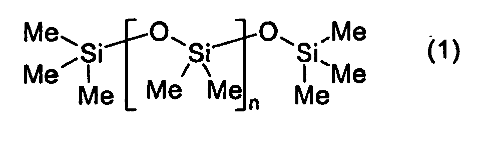 mit N = (n + 2) wobei der Anteil an Siloxanen mit N > 9 höher als 10 Gew.-% und N > 12 höher als 5 Gew.-% ist, und dass als hochreaktive Polyole Polymerpolyole alleine oder in Abmischungen mit ungefüllten Polyolen eingesetzt werden, wobei die Polymerpolyole feste organische Füllstoffe in disperser Verteilung enthalten.

Polysiloxane mit 13 bis 22 Si-Einheiten können in Anteilen von bis zu 30 Gew.-% enthalten sein.

Es sind auch Anteile mit N > 22 in Anteilen von bis zu 5 Gew.-% enthalten. Die Anteile an flüchtigen linearen (N < 5) und cyclischen Siloxanen (D3 bis D8) sollten < 5 Gew.-%, vorzugsweise < 2 Gew.-% sein. Durch die Abtrennung der kurzkettigen Siloxane wird ein besseres Emissions- und Foggingverhalten der Schäume erreicht.

Die erfindungsgemäß verwendeten Siloxane können beispielsweise hergestellt werden durch kostengünstige Abtrennung der leicht flüchtigen linearen (N < 5) und cyclischen (D3 bis D8) Bestandteile.

Die erfindungsgemäß verwendeten Polysiloxane können alleine oder in Kombination mit anderen Siloxanen, die auch organisch modifiziert sein können, Stabilisatoren und/oder Zellöffner eingesetzt werden.

Die erfindungsgemäß verwendeten Siloxane werden in Mengen von 0,01 bis 1,0 und bevorzugt in Mengen von 0,01 bis 0,7 Anteilen pro hundert Teile Polyol eingesetzt.

Als Katalysatoren können die nach dem Stand der Technik bekannten Substanzen verwendet werden wie insbesondere Amine, Zinn-, Zink-Verbindungen.

Es können sowohl chemische als auch physikalische Treibmittel eingesetzt werden wie z.B. CO₂, Pentan, FCKW, Wasser, Methylenchlorid. Hierdurch werden die Raumgewichte der Schäume in der dem Fachmann bekannten Weise entsprechend beeinflusst.

Die erfindungsgemäß verwendeten Stabilisatoren sind sowohl für den Kaltblock- als auch den Kaltformschaum, für Systeme auf der Basis rein TDI, MDI und deren Mischungen in Kombination mit den entsprechenden Polyolen einsetzbar.

Die erfindungsgemäß verwendeten Stabilisatoren besitzen ein breiteres Verarbeitungsspiel. Man erzielt eine gute Stabilisierung bei gleichzeitig verbesserter Offenzelligkeit des Schaumes. Aufgrund der Vielzahl an möglichen Rohstoffen sind grundsätzlich sehr viele Formulierungsvarianten möglich. Zur Optimierung der jeweiligen Formulierungsvariante können daher gegebenenfalls einige orientierende Versuche erforderlich sein.

Die Eigenschaften der erfindungsgemäßen Polymethylsiloxane der Formel (1) werden durch die folgenden Beispiele belegt. Die Mengenangaben erfolgen in Gewichtsteilen. Die Polysiloxane werden in unterschiedlichen Mengen eingesetzt.

### Beispiele:

In den folgenden Beispielen wurden die erfindungsgemäßen Siloxane in den Formulierungen A, B und C ausgeprüft.

### Beschreibung der Formulierungen:

### Formulierung A:

75 Teile Polyol (Hyperlite 1629) mit OH-Zahl 31 mgKOH/g, 25 Teile Polymerpolyol (Hyperlite 1650) mit OH-Zahl 20 mgKOH/g und Feststoffgehalt von 43 %, 4 Teile Wasser, 0,47 Teile einer Mischung aus TEGOAMIN 33 und TEGOAMIN BDE, 1,45 Teile Vernetzer und 47 Teile Toluylendiisocyanat mit 80 % Anteil 2,4-Diisocyantotoluol und 20 % 2,6-Diisocyantotoluol (T80).

### Formulierung B:

70 Teile Polyol (Voralux HF 505) mit OH-Zahl 29 mgKOH/g, 30 Teile Polymerpolyol (Voralux HL 400) mit OH-Zahl 33 mgKOH/g und Feststoffgehalt von 43 %, 4,5 Teile Wasser, 1,75 Teile Vernetzer, 1,87 Teile einer Mischung aus TEGOAMIN 33 und TEGOAMIN ZE 1, 1,2 Teile Zellöffner, 0,3 Teile Katalysator, basierend auf Zinn und 53 Teile Isocyanat Toluylendiisocyanat mit 80 % Anteil 2,4-Diisocyantotoluol und 20 % 2,6-Diisocyantotoluol (T80).

### Formulierung C:

100 Teile Polymerpolyol (Voranol HN 360) mit OH-Zahl 29 mgKOH/g und Feststoffgehalt von 15 %, 2,5 Teile Wasser, 0,58 Teile einer Mischung aus TEGOAMIN 33 und TEGOAMIN BDE, 2 Teile Zellöffner, 0,11 Teile Katalysator, basierend auf Zinn und 51 Teile Isocyanat bestehend aus 72 % eines MDI-Prepolymers mit einem NCO-Gehalt von 28 % und 28 % eines MDI-basierenden Oligomers mit einem NCO-Gehalt von 32 %.

### Beispiele im Formschaum, Formulierung A:

Die Schäume wurden in der bekannten Art und Weise hergestellt, indem man alle Komponenten außer dem Isocyanat in einem Becher mischte, anschließend das Isocyanat zugab und bei hoher Rührerdrehzahl für 7 Sekunden einrührte. Dann gab man das Reaktionsgemisch in eine beheizte Form (65 °C) und ließ es dort für 6 Minuten abreagieren. Danach wurde der Formschaum entnommen und die Aufdrückkräfte (initial Force-to-crush, FTC) und weitere physikalische Eigenschaften bestimmt.

Diese Kraft ist ein Maß für die Offenzelligkeit des Schaums, d.h. je geringer der Kraftaufwand, je offenzelliger ist der Schaum bereits unmittelbar nach der Verschäumung.

### Beispiel 1:

Als Stabilisator wurde ein erfindungsgemäßes Polysiloxangemisch verwendet bei dem der Anteil mit N < 5 bei unter 1 %, N > 12 bei über 15 % und N > 22 bei ca. 2 % lag.
Es wurden 0,1 Teile des Siloxans auf 100 Teile Polyol eingearbeitet. Der Schaum hatte eine gute Stabilität und zeigte keine Fehler in den Randzonen oder der Haut. Die Zellenzahl betrug 9 Zellen/cm. Die Aufdrückkraft betrug: 69,4 kPa.

### Beispiel 2:

Als Stabilisator wurde ein erfindungsgemäßes Polysiloxangemisch verwendet bei dem der Anteil mit N < 5 bei unter 1 %, N > 12 bei über 15 % und N > 22 bei ca. 2 % lag.
Es wurden 0,05 Teile des Siloxans auf 100 Teile Polyol eingearbeitet. Der Schaum hatte eine gute Stabilität und zeigte keine Fehler in den Randzonen oder der Haut. Die Zellenzahl betrug 8 Zellen/cm. Die Aufdrückkraft betrug: 58,7 kPa.

### Beispiel 3:

Als Stabilisator wurde ein erfindungsgemäßes Polysiloxangemisch verwendet bei dem der Anteil mit N > 12 bei 8 % lag.
Es wurden 0,05 Teile des Siloxans auf 100 Teile Polyol eingearbeitet. Der Schaum hatte eine gute Stabilität und zeigte keine Fehler in den Randzonen oder der Haut. Die Zellenzahl betrug 10 Zellen/cm. Die Aufdrückkraft betrug: 56,1 kPa.

### Beispiel 4:

Als Stabilisator wurde ein erfindungsgemäßes Polysiloxangemisch verwendet bei dem der Anteil mit N < 5 bei unter 1 % und N von 11 bis 14 bei über 55 % lag.

Es wurden 0,04 Teile des Siloxans auf 100 Teile Polyol eingearbeitet. Der Schaum hatte eine gute Stabilität und zeigte keine Fehler in den Randzonen oder der Haut. Die Zellenzahl betrug 11 Zellen/cm. Die Aufdrückkraft betrug: 54,2 kPa.

### Beispiele im Blockschaum, Formulierung B:

Die Schäume wurden in der bekannten Art und Weise hergestellt, indem man alle Komponenten außer dem Isocyanat in einem Becher mischte, anschließend das Isocyanat zugab und bei hoher Rührerdrehzahl für 7 Sekunden einrührte. Dann gab man das Reaktionsgemisch in einen mit Papier ausgekleideten Behälter mit einer Grundfläche von 28 x 28 cm. Man bestimmte die Steighöhe und den Rückfall. Das Abblasen des Schaumes wurde mit Werten von 0 bis 2 bewertet, wobei 0 für schlechtes bzw. nicht erkennbares und 2 für sehr gutes Abblasen vergeben wurde. Nach dem vollständigen Aushärten der Schäume wurden weitere physikalische Eigenschaften bestimmt.

### Beispiel 5:

Als Stabilisator wurde ein erfindungsgemäßes Polysiloxangemisch verwendet bei dem der Anteil mit N > 12 bei 8 % lag.
Es wurden 0,1 Teile des Siloxans auf 100 Teile Polyol eingearbeitet. Der Schaum hatte eine gute Stabilität: Bei einer Steighöhe von 31,0 cm betrug der Rückfall nur 0,2 cm. Das Abblasverhalten wurde mit 1 bis 2 bewertet. Die Zellenzahl betrug 8 bis 9 Zellen/cm.

### Beispiel 6:

Als Stabilisator wurde ein erfindungsgemäßes Polysiloxangemisch verwendet bei dem der Anteil mit N < 5 bei unter 1 % und N von 11 bis 14 bei über 55 % lag.

Es wurden 0,08 Teile des Siloxans auf 100 Teile Polyol eingearbeitet. Der Schaum hatte eine gute Stabilität: Bei einer Steighöhe von 31,2 cm betrug der Rückfall nur 0,2 cm. Das Abblasverhalten wurde mit 1 bis 2 bewertet. Die Zellenzahl betrug 9 bis 10 Zellen/cm.

### Beispiel 7:

Als Stabilisator wurde ein erfindungsgemäßes Polysiloxangemisch verwendet bei dem der Anteil mit N < 5 bei unter 1 %, N > 12 bei über 15 % und N > 22 bei ca. 2 % lag.
Es wurden 0,1 Teile des Siloxans auf 100 Teile Polyol eingearbeitet. Der Schaum hatte eine gute Stabilität: Bei einer Steighöhe von 30,6 cm betrug der Rückfall nur 0,2 cm. Das Abblasverhalten wurde mit 1 bewertet. Die Zellenzahl betrug 7 bis 8 Zellen/cm.

### Vergleichsbeispiel 1:

Als Stabilisator wurde ein Polysiloxangemisch der folgenden Zusammensetzung verwendet: N = 5: 21,5 %, N = 6: 31,3 %, N = 7: 27,6 %, N = 8: 19,4 %, N = 9: 0,2 %, wie es in DE-OS-25 33 074 beschrieben wurde.
Es wurden 0,1 Teile des Siloxans auf 100 Teile Polyol eingearbeitet. Der Schaum hatte keine gute Stabilität: Bei einer Steighöhe von 30,8 cm betrug der Rückfall 1,0 cm. Das Abblasverhalten wurde mit 0 bis 1 bewertet. Die Zellenzahl betrug 10 Zellen/cm.

### Vergleichsbeispiel 2:

Als Stabilisator wurde ein Polysiloxangemisch der folgenden Zusammensetzung verwendet: N = 5: 0,4 %, N = 6: 2,6 %, N = 7: 25,2 %, N = 8: 46,8 %, N = 9: 23,2 %, N = 10: 1,8 %, wie es in EP-A-1 095 968 beschrieben wurde.
Es wurden 0,1 Teile des Siloxans auf 100 Teile Polyol eingearbeitet. Der Schaum hatte keine gute Stabilität: Bei einer Steighöhe von 30,5 cm betrug der Rückfall 2,0 cm. Das Abblasverhalten wurde mit 0 bewertet. Die Zellenzahl betrug 8 bis 9 Zellen/cm.

### Beispiele im Blockschaum, Formulierung C:

Die Schäume wurden in der bekannten Art und Weise hergestellt, indem man alle Komponenten außer den Isocyanaten in einem Becher mischte, anschließend die Isocyanate zugab und bei hoher Rührerdrehzahl für 7 Sekunden einrührte. Dann gab man das Reaktionsgemisch in einen mit Papier ausgekleideten Behälter mit einer Grundfläche von 28 x 28 cm. Man bestimmte die Steighöhe und den Rückfall. Das Abblasen des Schaumes wurde mit Werten von 0 bis 2 bewertet, wobei 0 für schlechtes bzw. nicht erkennbares und 2 für sehr gutes Abblasen vergeben wurde. Nach dem vollständigen Aushärten der Schäume wurden weitere physikalische Eigenschaften bestimmt.

### Beispiel 8:

Als Stabilisator wurde ein erfindungsgemäßes Polysiloxangemisch verwendet bei dem der Anteil mit N < 5 bei unter 1 % und N von 11 bis 14 bei über 55 % lag.
Es wurden 0,016 Teile des Siloxans auf 100 Teile Polyol eingearbeitet. Der Schaum hatte eine gute Stabilität: Bei einer Steighöhe von 20,1 cm betrug der Rückfall nur 0,2 cm. Das Abblasverhalten wurde mit 1 bewertet. Die Zellenzahl betrug 12 Zellen/cm.

### Beispiel 9:

Als Stabilisator wurde ein erfindungsgemäßes Polysiloxangemisch verwendet bei dem der Anteil mit N < 5 bei unter 1 %, N > 12 bei über 15 % und N > 22 bei ca. 2 % lag.
Es wurden 0,016 Teile des Siloxans auf 100 Teile Polyol eingearbeitet. Der Schaum hatte eine gute Stabilität: Bei einer Steighöhe von 20,9 cm betrug der Rückfall nur 0,4 cm. Das Abblasverhalten wurde mit 1 bewertet. Die Zellenzahl betrug 14 Zellen/cm.

## Patentansprüche

1. Verfahren zur Herstellung von Polyurethan-Kaltschäumen durch Umsetzung eines Gemisches aus hochreaktiven, gegebenenfalls Füllstoffe enthaltenden, Polyolen mit polyfunktionellen Isocyanaten, Aminen, Vernetzern, Katalysatoren, Treibmitteln und Stabilisatoren, welches **dadurch gekennzeichnet ist, dass** man als Stabilisatoren Verbindungen der allgemeinen Formel (1) verwendet 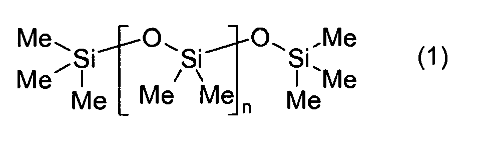 wobei der Anteil an Siloxanen mit N = (n + 2) > 9 höher als 10 Gew.-% und N > 12 gleich oder höher als 5 Gew.-% ist, wobei auch Anteile an Siloxanen mit N > 22 enthalten sind, deren Anteil bis zu 5 Gew.-% beträgt und wobei als hochreaktive Polyole Polymerpolyole alleine oder in Abmischungen mit ungefüllten Polyolen eingesetzt werden, wobei die Polymerpolyole feste organische Füllstoffe in disperser Verteilung enthalten, und die Polyole einen Gehalt an primären Hydroxylgruppen von mindestens 70 % aufweisen.

2. Verfahren zur Herstellung von Polyurethan-Kaltschäumen gemäß Anspruch 1, **dadurch gekennzeichnet, dass** die Anteile an linearen mit N < 5 und an cyclischen Siloxanen D3 bis D8 kleiner als 5 Gew.-% sind.

3. Verfahren zur Herstellung von Polyurethan-Kaltschäumen gemäß mindestens einem der Ansprüche 1 und 2, **dadurch gekennzeichnet, dass** die Polyole ein mittleres Molekulargewicht zwischen 4.800 und 6.500 g/mol aufweisen.

4. Verfahren zur Herstellung von Polyurethan-Kaltschäumen gemäß mindestens einem der Ansprüche 1 bis 3, **dadurch gekennzeichnet, dass** als polyfunktionelle Isocyanate Toluylendiisocyanat, Diphenymethandiisocyanat oder deren Mischungen verwendet werden.

## Claims

1. Process for the preparation of polyurethane cold cure foams by reacting a mixture of highly reactive polyols optionally containing fillers with polyfunctional isocyanates, amines, crosslinking agents, catalysts, blowing agents and stabilizers, which process is **characterized in that** the stabilizers used are compounds of the general formula (1) 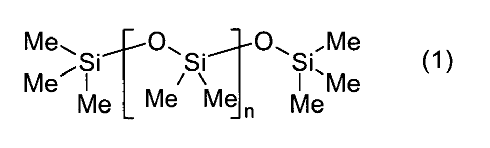 the proportion of siloxanes with N = (n + 2) > 9 being higher than 10% by weight and that with N > 12 being equal to or higher than 5% by weight, fractions of siloxanes with N > 22 also being present and the proportion thereof being up to 5% by weight, and polymer polyols, alone or as mixtures with unfilled polyols, being used as highly reactive polyols, the polymer polyols containing dispersed solid organic fillers, and the polyols having a content of primary hydroxyl groups of at least 70%.

2. Process for the preparation of polyurethane cold cure foams according to Claim 1, **characterized in that** the fractions of linear siloxanes with N < 5 and of cyclic siloxanes D3 to D8 are less than 5% by weight.

3. Process for the preparation of polyurethane cold cure foams according to at least one of Claims 1 and 2, **characterized in that** the polyols have an average molecular weight of from 4800 to 6500 g/mol.

4. Process for the preparation of polyurethane cold cure foams according to at least one of Claims 1 to 3, **characterized in that** the polyfunctional isocyanates used are toluylene diisocyanate, diphenylmethane diisocyanate or mixtures thereof.

## Revendications

1. Procédé pour la production de mousses à froid de polyuréthanne, par mise en réaction d'un mélange de polyols hautement réactifs, contenant éventuellement des charges, avec des isocyanates polyfonctionnels, des amines, des agents de réticulation, des catalyseurs, des agents d'expansion et des stabilisants, qui est **caractérisé en ce qu'**on utilise comme stabilisants des composés de formule générale (1) 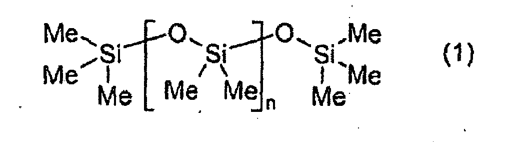 dans lequel la proportion de siloxanes où N = (n + 2) > 9 est supérieure à 10 % en poids et où N > 12 est égale ou supérieure à 5 % en poids, des proportions de siloxanes où N > 22 étant également contenues, dont la proportion va jusqu'à 5 % en poids et, en tant que polyols hautement réactifs, des polymère-polyols étant utilisés seuls ou en mélanges avec des polyols non chargés, les polymère-polyols contenant des charges organiques solides en répartition dispersée, et les polyols ayant une teneur en groupes hydroxy primaires d'au moins 70 %.

2. Procédé pour la production de mousses à froid de polyuréthanne selon la revendication 1, **caractérisé en ce que** les proportions de siloxanes linéaires où N < 5 et de siloxanes cycliques D3 à D8 sont inférieures à 5 % en poids.

3. Procédé pour la production de mousses à froid de polyuréthanne selon au moins l'une des revendications 1 et 2, **caractérisé en ce que** les polyols présentent une masse moléculaire moyenne comprise entre 4 800 et 6 500 g/mole.

4. Procédé pour la production de mousses à froid de polyuréthanne selon au moins l'une des revendications 1 à 3, **caractérisé en ce qu'**on utilise comme isocyanates polyfonctionnels le toluylène-diisocyanate, le diphénylméthane-diisocyanate ou des mélanges de ceux-ci.
